# EUROPÄISCHE PATENTSCHRIFT

(11) **EP 2 489 560 B1**
(45) Veröffentlichungstag und Bekanntmachung des Hinweises auf die Patenterteilung: **27.08.2014**
(21) Anmeldenummer: 12000633.3
(22) Anmeldetag: 01.02.2012
(51) Int. Cl.: B60R 25/02, B62D 5/04, B62D 3/12, B62D 21/11

(54) **Vorderachsmodul eines Kraftfahrzeugs, mit einer als Diebstahlschutz wirkenden Vorrichtung an einer Lenkradsperre**
Front axle module for a motor vehicle, with a device on a steering wheel lock for preventing theft
Module d'essieu avant, avec un dispositif ayant une action antivol sur un dispositif antivol de direction à verrou

(30) Priorität: 18.02.2011 DE 102011011707
(43) Veröffentlichungstag der Anmeldung: 22.08.2012
(73) Patentinhaber: AUDI AG, 85045 Ingolstadt (DE)
(72) Erfinder: Züge, Frank, 85110 Kipfenberg (DE); Kunsch, Peter, 85123 Karlskron (DE)
(74) Vertreter: Asch, Konrad

(56) Entgegenhaltungen:
- EP-A1- 1 447 286
- EP-A1- 1 621 424
- EP-A1- 1 946 981
- DE-A1- 10 160 945
- DE-A1- 10 229 161
- DE-A1-102006 048 946
- DE-A1-102006 056 042
- DE-A1-102010 042 435
- FR-A1- 2 889 141
- FR-A1- 2 889 142
- JP-A- 8 175 328
- US-A1- 2003 107 200

## Beschreibung

Die Erfindung betrifft ein Vorderachsmodul eines Kraftfahrzeugs, mit einer als Diebstahlschutz wirkende Vorrichtung an einer Lenkradsperre für Kraftfahrzeuge gemäß dem Oberbegriff des Patentanspruches 1.

Durch die DE 101 60 945 A1 ist eine Vorrichtung bekannt, bei der die Verriegelungseinrichtung im Innenraum des Kraftfahrzeuges an ein Trägerrohr einer Lenksäule der Lenkung angebaut ist und ein Lenkschlossgehäuse aufweist, indem der in die Lenksäule eingreifende Sperrbolzen geführt ist. Um bei aktivierter Lenkradsperre ein missbräuchliches Ausbrechen des Lenkschlossgehäuses aus dem Trägerrohr zu verhindern, ist zwischen dem Trägerrohr und dem Lenkschlossgehäuse eine metallische Verstärkungsplatte eingesetzt. Die bekannte Vorrichtung verstärkt somit die Verbindung zwischen dem Lenkschlossgehäuse und dem Trägergehäuse, kann aber nicht ausschließen, dass bei entsprechender Zugänglichkeit durch gezieltes Anbohren des Funktionsmechanismus des Sperrbolzens innerhalb des Lenkschlossgehäuses dessen Sperrfunktion aufgehoben wird.

Es sind auch Vorrichtungen als Lenkradsperre bekannt, bei denen der Sperrbolzen elektromagnetisch (nicht rein mechanisch durch ein Lenkradschloss bzw. Zündschloss) betätigt ist und demzufolge auch an anderer Stelle des gesamten Lenkmechanismus der Lenkung des Kraftfahrzeuges angeordnet sein kann. Wenn es aus konstruktiven und baulichen Gegebenheiten möglich ist, kann die Anordnung im Kraftfahrzeug dann so sein, dass die Verriegelungseinrichtung nur durch Ausbau angrenzender Bauteile zugänglich ist, was den Diebstahlschutz beträchtlich erhöht.

DE 10 2006 056 042 A1 offenbart ein Vorderachsmodul gemäß dem Oberbegriff des Anspruchs 1.

Aufgabe der Erfindung ist es, eine Vorrichtung der gattungsgemäßen Art vorzuschlagen, die mit konstruktiv und baulich einfachen Mitteln den Diebstahlschutz der Lenkradsperre erhöht bzw. ein missbräuchliches Anbohren des Gehäuses der Verriegelungseinrichtung weitgehendst ausschließt.

Diese Aufgabe wird erfindungsgemäß mit den Merkmalen des Patentanspruches 1 gelöst. Vorteilhafte Weiterbildungen der Erfindung sind in den Unteransprüchen angeführt.

Erfindungsgemäß wird vorgeschlagen, dass zumindest ein indirekt von der äußeren Umgebung her zugänglicher Bereich des Gehäuses der Verriegelungseinrichtung durch wenigstens ein gegen zerstörerische Beschädigung mit Hilfsmitteln, insbesondere gegen ein Durchbohren mit Schneid- und/oder Bohrwerkzeugen, schützendes Abweisteil abgeschirmt und/oder gesichert ist. Das Abweisteil ist zum Beispiel aus gehärtetem Stahlblech (zum Beispiel der Zusammensetzung 22MnB5). Unter "indirekt zugänglich" wird verstanden, dass der Verriegelungseinrichtung zum Beispiel eine Verkleidung oder ein Funktionsteil des Kraftfahrzeuges benachbart ist, die bei einem Diebstahlsversuch mit durchbohrt werden könnte.

Das Abweisteil kann in bevorzugter Ausbildung der Erfindung durch zum Beispiel eine Platte gebildet sein und/oder aus Hartmetall, insbesondere aus legierten oder gehärteten Metallen, zum Beispiel aus Wolframkarbid oder anderen nitrierten Metallen, hergestellt sein und ist dementsprechend mit einem Bohrer aus Werkzeugstahl oder dergleichen kaum zu bearbeiten. Eine zum Beispiel Platte als Abweisteil kann kostengünstig, zum Beispiel im Sinterverfahren oder dergleichen, hergestellt und an dem zum Beispiel gegossenen Gehäuse der Verriegelungseinrichtung angeordnet sein.

Zur Erzielung einer zusätzlichen Abweisfunktion kann als Abweisteil mit Bezug zu einem definierten indirekten Zugangsbereich des Gehäuses der Verriegelungseinrichtung, schräg oder mit einer Krümmung angeordnet sein, was zum Beispiel das Ansetzen eines Bohrers entsprechend erschweren kann.

Das Abweisteil ist nicht unmittelbar am Gehäuse der Verriegelungseinrichtung, sondern an einem in unmittelbarer Nähe der Verriegelungseinrichtung positionierten Bauteil des Kraftfahrzeuges derart angeordnet sein, dass es damit den indirekt zugänglichen Bereich der Verriegelungseinrichtung abdeckt. Damit kann gegebenenfalls bei baulich einfacherer Gestaltung der Funktionsteile ein größerer Zugangsbereich der Verriegelungseinrichtung abgeschirmt bzw. abgesichert werden.

Erfindungsgemäß ist die Verriegelungseinrichtung an einem Vorderachsmodul des Kraftfahrzeuges in eine Lenkeinrichtung integriert, die an den Hilfsrahmen des Vorderachsmoduls angebaut ist, kann in vorteilhafter Weise das Abweisteil an einem dem Gehäuse der Verriegelungseinrichtung gegenüberliegenden Abschnitt des Hilfsrahmens angeordnet sein.

Dabei kann das bevorzugt als Platte ausgeführte Abweisteil von außen bzw. von der Unterseite des Fahrschemels bzw. Hilfsrahmens nicht sichtbar am Hilfsrahmen oder an einem anderen Funktionsteil (zum Beispiel einem Verkleidungsteil) befestigt oder in dieses integriert sein und somit bei einem geringen Mehraufwand den potentiellen Zugangsbereich zur Verriegelungseinrichtung absichern.

Gemäß einer besonders bevorzugten Weiterbildung der Erfindung kann das Abweisteil als mehrlagiges Sandwichteil ausgeführt sein, so dass es zum Beispiel aufgrund dieser Mehrlagigkeit einen noch größeren Widerstand entgegensetzt als ein einlagiger Aufbau des zum Beispiel als Platte ausgebildeten Abweisteils. Eine derartige Ausführung kann insbesondere bei einer großflächigeren Ausbildung des Abweisteiles gewichts- und kostengünstiger als eine Hartmetallplatte sein und trotzdem einen ausreichenden Schutz darstellen.

Besonders bevorzugt kann dabei das Abweisteil durch wenigstens zwei aneinandergefügte Lochplatten mit derart zueinander versetzten Bohrungen ausgeführt sein, dass beim Versuch des Durchbohrens des Abweisteiles der rotierende Bohrer jeweils in einer der zur ersten Lochplatte versetzten Bohrungen der zweiten Lochplatte verkantet bzw. blockiert oder bricht.

In einer weiteren Ausgestaltung der Erfindung kann das sandwichartige Abweisteil durch wenigstens zwei Metallbleche und eine dazwischen eingefügte Faserverbundmatte aus hochfesten Fasern gebildet sein, die sich beim Durchbohren um die Bohrerspitze herum aufstauen bzw. die Schneiden des Bohrers außer Wirkung setzen.

Gemäß einer besonders vorteilhaften konkreten Ausgestaltung der vorliegenden Erfindungsidee ist vorgesehen, dass der Sperrbolzen im Sperrzustand in ein Lenkgetriebe der Lenkung, insbesondere mit direktem Zugriff auf die Zahnstange des Lenkgetriebes, eingreift. Dadurch wird auf technisch einfache Weise eine funktionssichere Sperrung erzielt.

Mehrere Ausführungsbeispiele der Erfindung sind im Folgenden mit weiteren Einzelheiten näher erläutert. Die schematische Zeichnung zeigt in:
- Fig. 1: in skizzenhafter Darstellung und in Seitenansicht eine Lenkung eines Kraftfahrzeuges mit einem Lenkrad, einer Lenksäule und einem auf einem Hilfsrahmen eines Achsträgermoduls angeordneten Zahnstangen-Lenkgetriebe;
- Fig. 2: das Zahnstangen-Lenkgetriebe mit einem elektrischen Servomotor und einer an das Gehäuse des Lenkgetriebes angebauten, elektromagnetisch betätigten Verriegelungseinrichtung zum Sperren des Lenkrades bzw. der Lenkung in einer Ansicht von unten, ohne Hilfsrahmen;
- Fig. 3: einen Querschnitt gemäß Linie III - III der Fig. 2 durch das nur in Umrissen dargestellte Lenkgetriebe, den Servomotor und die Verriegelungseinheit, die mit einer gekrümmt ausgeführten Abweisplatte aus Hartmetall versehen ist, die einen definierten, indirekten Zugangsbereich über den darunter positionierten Hilfsrahmen absichert jedoch gemäß einem nicht erfindungsgemäßen Beispiel;
- Fig. 4: die Darstellung gemäß Fig. 3, mit einer an der Verriegelungseinheit angeordneten, zum Zugangsbereich schräg ausgerichteten, ebenen Abweisplatte jedoch gemäß einem nicht erfindungsgemäßen Beispiel;
- Fig. 5: die Darstellung gemäß Fig. 3 oder 4, mit einer in die Unterseite des Hilfsrahmens des Vorderachsmoduls integrierten, ebenen Abweisplatte aus Hartmetall;
- Fig. 6: abschnittsweise ein sandwichartiges Abweisteil mit zwei aneinander anliegenden Metallblechen, die mit zueinander versetzten Bohrungen versehen sind; und
- Fig. 7: ein alternatives, sandwichartiges Abweisteil, bei dem zwischen zwei Metallblechen eine Faserverbundmatte mit hochfesten Fasern eingefügt ist.

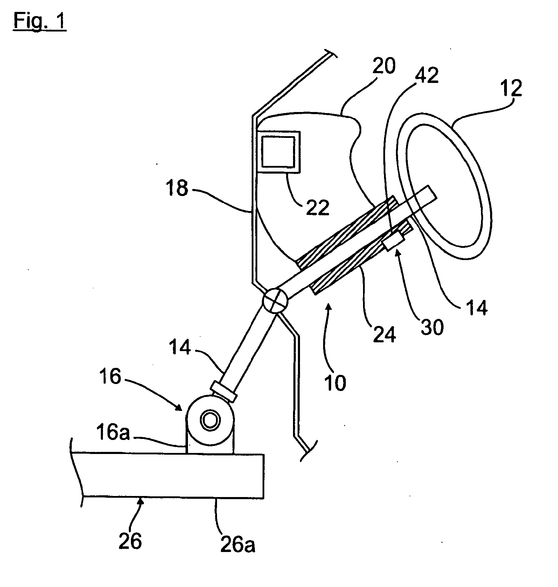

In der Fig. 1 ist grob skizzenhaft eine Lenkung in einem Personen-Kraftfahrzeug dargestellt, mit einer Lenksäule 10, deren geknickt ausgeführte Lenkwelle 14 ein Lenkrad 12 trägt und trieblich mit einem Zahnstangen-Lenkgetriebe 16 verbunden ist.

Die Lenkwelle 14 ist in einem Trägerrohr 24 drehbar gelagert, das im Inneren des Kraftfahrzeuges an einer Stirnwand 18 und einem die Armaturentafel 20 tragenden Querträger 22 befestigt ist.

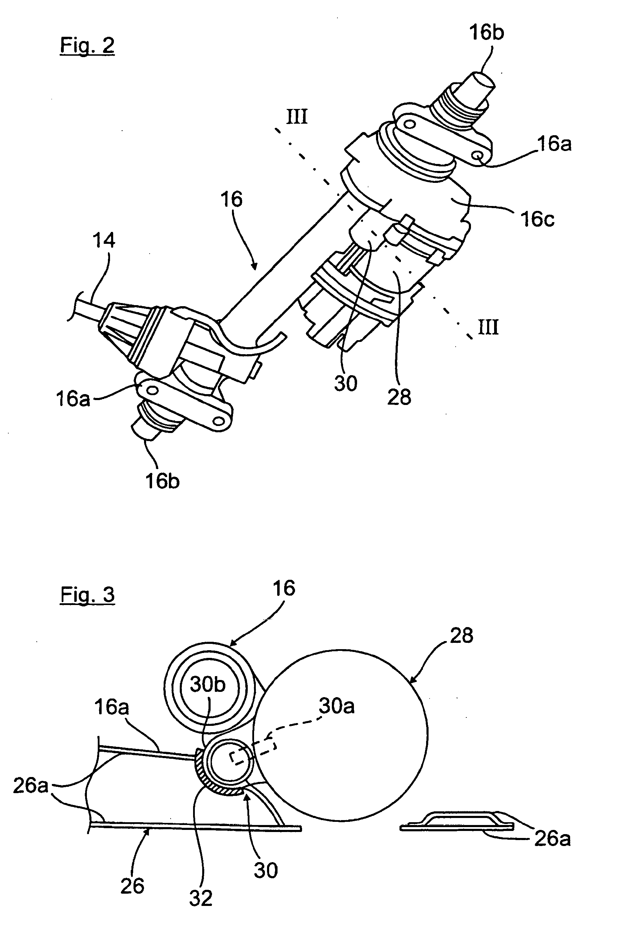

Das außerhalb der Stirnwand 18 angeordnete Lenkgetriebe 16 ist über zwei Befestigungskonsolen 16a (vergleiche auch Fig. 2) an einem rahmenförmigen Hilfsrahmen 26 befestigt, der als Teil eines Vorderachsmoduls des Kraftfahrzeuges (nicht dargestellt) über entsprechende Aggregatlager ein Antriebsaggregat, zum Beispiel eine Brennkraftmaschine oder eine Elektromaschine, gegebenenfalls ein nachgeschaltetes Geschwindigkeits-Wechselgetriebe und gegebenenfalls Radführungselemente der vorderen Radaufhängung aufnimmt.

Das Vorderachsmodul kann in bekannter Weise ausgeführt sein, wobei der Hilfsrahmen 26 in Fahrzeuglängsrichtung verlaufende Holme 26a (nur abschnittsweise dargestellt) und in Querrichtung ausgerichtete Holme (nicht ersichtlich) aufweist und über schwingungsisolierende Lager mit dem nicht dargestellten Aufbau des Kraftfahrzeuges verbunden ist.

Das an dem Hilfsrahmen 26 befestigte Lenkgetriebe 16 (Fig. 2) ist oberhalb des Hilfsrahmens 26 (vergleiche auch Fig. 3) positioniert und über die Lenkwelle 14 trieblich mit dem Lenkrad 12 verbunden. Der Abtrieb in Querrichtung erfolgt in bekannter Weise über eine Zahnstange 16b und nicht dargestellte Spurstangen auf die lenkbaren Räder des Kraftfahrzeuges.

An das Gehäuse 16c des Lenkgetriebes 16 ist ferner ein elektrischer Servomotor 28 angebaut, der in nicht dargestellter Weise bei entsprechender Ansteuerung über ein Getriebe auf die Zahnstange 16b zur Unterstützung der aufzubringenden Lenkkräfte abtreibt.

In dieses im Gehäuse 16c integrierte Getriebe (nicht Gegenstand der Erfindung) kann ein elektromagnetisch betätigter Sperrbolzen 30a (nur gestrichelt angedeutet) einfahren, der dann die gesamte Lenkungsfunktion als Lenkradsperre wirkend blockiert.

Der Sperrbolzen 30a ist hier lediglich beispielhaft in einem etwa zylindrischen Gehäuse 30b einer nicht weiter dargestellten, elektrisch ansteuerbaren Verriegelungseinrichtung 30 axial verschiebbar angeordnet, wobei das Gehäuse 30b an das Lenkgetriebe-Gehäuse 16c angebaut oder direkt angeformt ist.

Wie insbesondere der Querschnitt gemäß Fig. 3 zeigt, ist an dem Gehäuse 30b der Verriegelungseinrichtung 30 ein gekrümmt und um einen definierten Umfangsabschnitt des etwa zylindrischen Gehäuses 30b ausgeführtes Abweisteil befestigt, das als eine schalenförmige Hartmetallplatte 32 aus bevorzugt Wolframkarbid hergestellt ist, wobei Fig. 3 ein Beispiel nicht gemäß der Erfindung zeigt.

Die Hartmetallplatte 32 ist zum Beispiel im Sinterverfahren gefertigt und formschlüssig und/oder stoffschlüssig mit dem Gehäuse 30b der Verriegelungseinrichtung 30 fest bzw. unlösbar verbunden. Die Hartmetallplatte 32 kann gegebenenfalls auch in das Gehäuse 30b aus Leichtmetall integriert, zum Beispiel eingegossen sein.

Die als Abweisteil dienende Hartmetallplatte 32 ist wie die Fig. 3 zeigt über einen Umfangsbereich von ca. 180 Grad derart an der Verriegelungseinheit 30 angeordnet, dass sie den von unten von dem Holm 26a des Hilfsrahmens 26 abgedeckten Zugangsbereich absichert. Die übrigen Umfangsbereiche der Verriegelungseinheit 30 bzw. dessen Gehäuses 30b sind von dem Lenkgetriebe-Gehäuse 16c bzw. von dem Lenkgetriebe 16 und dem Servomotor 28 unzugänglich abgedeckt.

Durch das Abweisteil bzw. die Hartmetallplatte 32 wird vermieden, dass bei einem Diebstahlsversuch mit entsprechendem Anbohren des Gehäuses 30b von unten durch den Hilfsrahmen 26 hindurch der Verriegelungsmechanismus mit dem Sperrbolzen 30a außer Funktion gesetzt bzw. die Lenkradsperre faktisch aufgehoben wird. Die gekrümmte Ausführung der Hartmetallplatte 32 trägt zudem dazu bei, dass im Falle eines Anbohrversuches der Bohrer entsprechend abgewiesen bzw. abgelenkt wird.

Es versteht sich, dass das Abweisteil bzw. die Hartmetallplatte 32 jeweils an die baulichen und konstruktiven Gegebenheiten bzw. die Positionierung der Verriegelungseinheit 30 und deren direkter oder indirekter Zugänglichkeit bei einem Diebstahlsversuch anzupassen ist. Gegebenenfalls kann sich das Abweisteil 32 um den gesamten, freien Umfang des Gehäuses 30b erstrecken oder sogar geschlossen ringförmig ausgeführt sein.

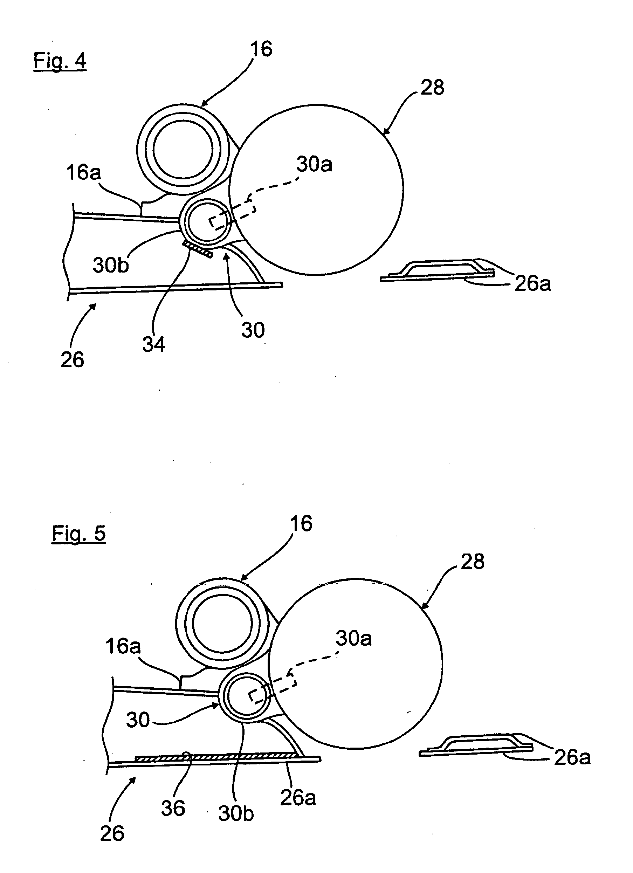

Die Fig. 4 zeigt ein Beispiel nicht gemäß der Erfindung, bei dem die an dem Gehäuse 30b der Verriegelungseinheit 30 befestigte Hartmetallplatte 34 als rechteckförmige, ebene Platte ausgeführt ist, die zudem derart schräg mit Bezug zum Zugänglichkeitsbereich angeordnet ist, dass bei einem Anbohrversuch etwa von senkrecht Unten (durch den Hilfsrahmen 26 hindurch) der Bohrer zusätzlich seitlich abgelenkt wird.

Im Übrigen kann die Hartmetallplatte 34 wie vorstehend zur Hartmetallplatte 32 ausgeführt hergestellt und am Gehäuse 30b der Verriegelungseinheit befestigt sein.

Die Fig. 5 zeigt ein Ausführungsbeispiel der Erfindung, bei dem das Abweisteil nicht an dem Gehäuse 30b der Verriegelungseinheit 30, sondern unmittelbar am Hilfsrahmen 26 als unmittelbar benachbartes Bauteil der Verriegelungseinheit 30 den besagten Zugangsbereich abdeckend angeordnet ist.

Das Abweisteil ist als ebene Hartmetallplatte 36 ausgeführt, die großflächig an dem unteren Blech des Holmes 26a des Hilfsrahmens 26 befestigt ist und zwar von Unten nicht sichtbar und nicht zugänglich an der Innenseite des Holmes 26a bzw. innerhalb dessen Profilhohlraumes. Die Hartmetallplatte 36 kann stoffschlüssig und/oder formschlüssig mit dem Holm 26a fest verbunden sein und gegebenenfalls bereits vor dem Fügen der Blechteile des Hilfsrahmens 26 entsprechend angebracht sein.

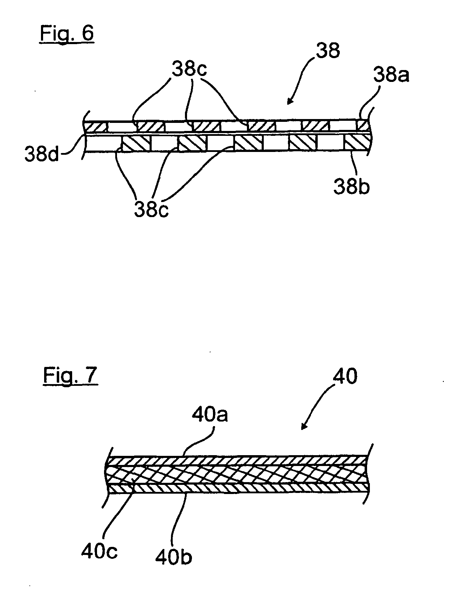

Gemäß den Fig. 6 und 7 kann abweichend zu den vorstehend beschriebenen Abweisteilen 32, 34, 36 als Abweisteil eine bevorzugt ebene Sandwichplatte 38 (Fig. 6) oder 40 (Fig. 7) verwendet sein, die ebenfalls zum Beispiel am Hilfsrahmen 26 entsprechend befestigt einem Durchbohren einen vermehrten Widerstand entgegensetzt.

Dabei weist die nur abschnittsweise dargestellte Sandwichplatte 38 (Fig. 6) ein oberes und ein unteres, bevorzugt aus Edelstahl bestehendes Metallblech 38a, 38b auf, in die einheitlich mit 38c bezeichnete Bohrungen definierten Durchmessers und Abstandes zueinander eingearbeitet sind. Die Metallbleche 38a, 38b können miteinander verschweißt oder durch Zwischenfügen einer weichen Matrix 38d (zum Beispiel aus Epoxydharz) als Zwischenschicht in einem definierten Abstand miteinander verbunden sein.

Die vor dem Fügen der Metallbleche 38a, 38b eingearbeiteten Bohrungen 38c sind wie ersichtlich, zum Beispiel etwa um den halben Bohrungsdurchmesser, derart zueinander versetzt, dass bei einem Durchbohrversuch mit einem Bohrer dieser zwangsläufig in dem von der Angriffsseite betrachtet zweiten Metallblech bzw. in einer dessen versetzt liegender Bohrungen 38c verkantet, blockiert oder sogar bricht. Die Bohrungsabstände sind dabei so klein gewählt, dass der Bohrer beim Ansetzen automatisch in eine der Bohrungen 38c im ersten Metallblech abgelenkt wird.

Ein alternatives, sandwichartiges Abweisteil 40 zeigt die Fig. 7, bei dem zwischen zwei fest durch Kleben, Bördeln, Nieten, etc. miteinander verbundenen Metallblechen 40a, 40b eine Faserverbundmatte 40c eingefügt ist, die ein Gewebe aus hochfesten Fasern, zum Beispiel Kevlar- oder Aramidfasern, in Längs- und/oder Queranordnung und enger Maschenweite aufweist.

Bei einem Durchbohrversuch wickeln sich die Fasern der Fasermatte 40c um die Bohrerspitze, wobei sie aufgestaut bzw. einen Pfropfen bildend die Bohrerschneiden blockieren bzw. wirkungslos machen.

Die Erfindung ist nicht auf die beschriebenen Ausführungsbeispiele beschränkt.

Grundsätzlich kann die Verriegelungseinheit 30 auch an einer anderen, geeigneten Stelle angeordnet sein und die Lenkung bzw. das Lenkrad 12 entsprechend sperren, wobei jedoch die beschriebene Anordnung am Lenkgetriebe 16, insbesondere mit direktem Zugriff auf die Zahnstange des Lenkgetriebes, die erfindungsgemäß bevorzugte Variante ist. Der zu sichernde Zugangsbereich und damit die Anordnung des Abweisteiles 32, 34, etc. kann dann zum Beispiel nach Unten, dem Fußraum vor den Vordersitzen des Kraftfahrzeuges zugewandt, gerichtet sein.

## Patentansprüche

1. Vorderachsmodul eines Kraftfahrzeugs, mit einer als Diebstahlschutz wirkenden Vorrichtung an einer Lenkradsperre in Kraftfahrzeugen, mit einer in einem Gehäuse (30b) angeordneten Verriegelungseinrichtung (30) mit einem betätigbaren Sperrbolzen (30a), der bei außer Betriebssetzen des Kraftfahrzeuges in ein Funktionselement der Lenkung des Kraftfahrzeuges blockierend eingreift, wobei die Verriegelungseinrichtung (30) und/oder deren Gehäuse (30b) an die Lenkung angebaut ist, wobei die Verriegelungseinrichtung (30) am Vorderachsmodul des Kraftfahrzeuges in eine Lenkeinrichtung (16) integriert ist, **dadurch gekennzeichnet, dass** die Lenkeinrichtung (16) an einen Hilfsrahmen (26) des Vorderachsmoduls angebaut ist, wobei zumindest ein indirekt von der äußeren Umgebung her zugänglicher Bereich des Gehäuses (30b) der Verriegelungseinrichtung (30) durch wenigstens ein gegen zerstörerische Beschädigung mit Hilfsmitteln schützendes Abweisteil (32, 34, 36, 38, 40) abgeschirmt und/oder gesichert ist, und wobei das Abweisteil (36, 38, 40) an einem dem Gehäuse (30b) der Verriegelungseinrichtung (30) gegenüberliegenden Abschnitt (26a) des Hilfsrahmens (26) angeordnet ist.

2. Vorderachsmodul nach Anspruch 1, **dadurch gekennzeichnet, dass** das bevorzugt als Platte (36, 38, 40) ausgeführte Abweisteil von außen bzw. von der Unterseite des Hilfsrahmens (26) nicht sichtbar am Bauteil (26) befestigt oder in dieses integriert ist.

3. Vorderachsmodul nach Anspruch 1 oder 2, **dadurch gekennzeichnet, dass** das Abweisteil als Sandwichplatte (38, 40) mehrlagig ausgeführt ist, insbesondere dergestalt, dass die Mehrlagigkeit einer zerstörerischen Beschädigung durch Hilfsmittel, insbesondere einem Durchbohren mit Schneid- und/oder Bohrwerkzeugen einen größeren Widerstand entgegensetzt, als ein einlagig aufgebautes Abweisteil

4. Vorderachsmodul nach Anspruch 3, **dadurch gekennzeichnet, dass** das Abweisteil (38) durch wenigstens zwei aneinandergefügte Metallplatten (38a, 38b) mit derart zueinander versetzten Bohrungen (38c) ausgeführt ist, insbesondere dergestalt, dass beim Versuch des Durchbohrens des Abweisteiles (38) der rotierende Bohrer jeweils in einer der zur ersten Metallplatte versetzten Bohrungen (38c) der zweiten Metallplatte verkantet.

5. Vorderachsmodul nach Anspruch 4, **dadurch gekennzeichnet, dass** die Metallplatten (38a, 38b) durch eine Zwischenschicht aus demgegenüber weicheren Material verbunden sind.

6. Vorderachsmodul nach Anspruch 3, **dadurch gekennzeichnet, dass** das Abweisteil (40) durch wenigstens zwei Metallbleche (40a, 40b) und eine dazwischen eingefügte Faserverbundmatte (40c) aus in eine Matrix eingebundenen, hochfesten Fasern gebildet ist, insbesondere dergestalt, dass sich die Fasern beim Durchbohren um die Bohrerspitze herum aufstauen.

7. Vorderachsmodul nach einem der vorhergehenden Ansprüche, **dadurch gekennzeichnet, dass** der Sperrbolzen (30a) im Sperrzustand in ein Lenkgetriebe der Lenkung eingreift, insbesondere mit direktem Zugriff auf die Zahnstange des Lenkgetriebes eingreift.

## Claims

1. Front axle module for a motor vehicle, having a device on a steering wheel lock acting as an anti-theft device in motor vehicles, having a locking device (30) arranged in a housing (30b) and comprising an operable locking bolt (30a) which engages, by a blocking action, in a functional element of the steering assembly of the vehicle when the vehicle is not in use, the locking device (30) and/or its housing (30b) being mounted on the steering assembly, the locking device (30) being integrated in a steering device (16) on the front axle module of the motor vehicle, **characterised in that** the steering device (16) is mounted on an auxiliary frame (26) of the front axle module, while at least an area of the housing (30b) of the locking device (30) which is indirectly accessible from the external surroundings is shielded and/or secured by at least one deflector part (32, 34, 36, 38, 40) which protects against destructive damage by auxiliary means, and wherein the deflector part (36, 38, 40) is arranged on a portion (26a) of the auxiliary frame (26) located opposite the housing (30b) of the locking device (30).

2. Front axle module according to claim 1, **characterised in that** the deflector part, preferably configured as a plate (36, 38, 40), is secured to the component (26) or integrated therein so as not to be visible from outside or from the underside of the auxiliary frame (26).

3. Front axle module according to claim 1 or 2, **characterised in that** the deflector part is configured in a plurality of layers as a sandwich plate (38, 40), particularly such that the multi-layered configuration offers greater resistance to destructive damage by auxiliary means, particularly to drilling with cutting and/or drilling tools, than a deflector part constructed in one layer.

4. Front axle module according to claim 3, **characterised in that** the deflector part (38) is formed by at least two metal plates (38a, 38b) attached to one another with bores (38c) offset from one another, particularly such that if an attempt is made to drill through the deflector part (38) the rotating drill jams in one of the bores (38c) in the second metal plate which are offset from those in the first metal plate.

5. Front axle module according to claim 4, **characterised in that** the metal plates (38a, 38b) are joined together by an intermediate layer of material that is softer than the plates.

6. Front axle module according to claim 3, **characterised in that** the deflector part (40) is formed by at least two sheet-metal plates (40a, 40b) and a composite fibre mat (40c) of high-strength fibres bound into a matrix inserted between said plates, particularly such that the fibres accumulate around the drill tip when drilling is carried out.

7. Front axle module according to one of the preceding claims, **characterised in that**, in the locked state, the locking bolt (30a) engages in a steering gear of the steering assembly, particularly with direct access to the rack of the steering gear.

## Revendications

1. Module d'essieu avant d'un véhicule automobile, comprenant un dispositif à action antivol sur un verrou de volant de direction dans des véhicules automobiles, un dispositif de verrouillage (30) aménagé dans un logement (30b) avec un boulon de blocage actionnable (30a), qui, lors de la mise hors service du véhicule automobile, s'engage avec un effet bloquant dans un élément fonctionnel de la direction du véhicule automobile, dans lequel le dispositif de verrouillage (30) et/ou son logement (30b) est ou sont rapportés sur la direction, dans lequel le dispositif de verrouillage (30) est intégré à un dispositif de direction (16) dans le module d'essieu avant du véhicule automobile, **caractérisé en ce que** le dispositif de direction (16) est monté sur un bâti auxiliaire (26) du module d'essieu avant, dans lequel au moins une zone du logement (30b) du dispositif de verrouillage (30) indirectement accessible depuis l'environnement extérieur est blindée et/ou protégée par au moins une pièce déviatrice (32, 34, 36, 38, 40) protégeant contre tout dommage destructif avec des moyens auxiliaires et dans lequel la pièce déviatrice (36, 38, 40) est aménagée sur une section (26a) du bâti auxiliaire (26) opposée au logement (30b) du dispositif de verrouillage (30).

2. Module d'essieu avant selon la revendication 1, **caractérisé en ce que** la pièce déviatrice de préférence conformée en plaque (36, 38, 40) n'est pas fixée de manière visible sur le composant (26) de l'extérieur ou de la partie inférieure du bâti
auxiliaire (26) ou lui est intégrée.

3. Module d'essieu avant selon la revendication 1 ou la revendication 2, **caractérisé en ce que** la pièce déviatrice se présente sous la forme d'une plaque en sandwich stratifiée (38, 40), en particulier de sorte que la stratification oppose une plus grande résistance à un dommage destructif par des moyens auxiliaires, en particulier à un perçage avec des outils de coupe et/ou de forage, qu'une pièce déviatrice formée d'une seule couche.

4. Module d'essieu avant selon la revendication 3, **caractérisé en ce que** la pièce déviatrice (38) est formée d'au moins deux plaques métalliques (38a, 38b) joints l'une à l'autre avec des alésages (38c) décalés l'un de l'autre, en particulier de sorte que, lors de la tentative de perçage de la pièce déviatrice (38), la mèche rotative bascule respectivement dans l'un des alésages (38c) de la seconde plaque métallique décalés par rapport à la première plaque métallique.

5. Module d'essieu avant selon la revendication 4, **caractérisé en ce que** les plaques métalliques (38a, 38b) sont reliées par une couche intermédiaire constitué par contre d'un matériau souple.

6. Module d'essieu avant selon la revendication 3, **caractérisé en ce que** la pièce déviatrice (40) est formée d'au moins deux tôles métalliques (40a, 40b) et d'un mat composite fibreux (40c) imbriqué entre elles et formé de fibres très solides intégrée à une matrice, en particulier de sorte que les fibres s'accumulent autour de la
pointe de la mèche lors d'un perçage.

7. Module d'essieu avant selon l'une quelconque des revendications précédentes, **caractérisé en ce que** le boulon de verrouillage (30a) s'engage à l'état verrouillé dans un mécanisme de direction, en particulier s'engage sur là crémaillère du mécanisme de direction avec un accès direct.
